# EUROPEAN PATENT SPECIFICATION

(11) **EP 3 224 681 B1**
(45) Date of publication and mention of the grant of the patent: **28.08.2019**
(21) Application number: 14811768.2
(22) Date of filing: 25.11.2014
(51) Int. Cl.: G05B 19/418

(54) **SYSTEM FOR VIRTUAL COMMISSIONING**
SYSTEM ZUR VIRTUELLEN INBETRIEBNAHME
SYSTÈME DE MISE EN SERVICE VIRTUELLE

(43) Date of publication of application: 04.10.2017
(73) Proprietor: ABB Schweiz AG, 5400 Baden (CH)
(72) Inventor: VILACOBA, Diego, E-08192 Sant Quirte del Vallès (ES); WEBER, Peter, 67117 Limburgerhof (DE)
(74) Representative: Marks, Frank
(86) International application number: PCT/EP2014/003135
(87) International publication number: WO 2016/082847

(56) References cited:
- JAYARAM ET AL: "Introducing quantitative analysis methods into virtual environments for real-time and continuous ergonomic evaluations", COMPUTERS IN INDUSTRY, ELSEVIER SCIENCE PUBLISHERS. AMSTERDAM, NL, vol. 57, no. 3, 1 April 2006 (2006-04-01), pages 283-296, XP005332125, ISSN: 0166-3615, DOI: 10.1016/J.COMPIND.2005.12.005
- F Bennis ET AL: "Virtual reality: A human centered tool for improving Manufacturing", Proceedings of Virtual Concept 2005, 8 November 2005 (2005-11-08), XP055215007, Retrieved from the Internet: URL:http://arxiv.org/ftp/arxiv/papers/0707 /0707.3563.pdf [retrieved on 2015-09-21]
- Francesco Caputo ET AL: "A STRUCTURED APPROACH TO SIMULATE MANUFACTURING SYSTEMS IN VIRTUAL ENVIRONMENT", XVIII Congreso Internacional de Ingeniería Gráfica, Barcelona, Spain, 31st May-2nd June., 31 May 2006 (2006-05-31), XP055215009, Retrieved from the Internet: URL:http://citeseerx.ist.psu.edu/viewdoc/d ownload?doi=10.1.1.111.9646&rep=rep1&type= pdf [retrieved on 2015-09-21]

## Description

The invention is related to a system for commissioning of production means, comprising a computing unit with a 3D simulation software application running thereon, a mobile vision device comprising two independent screens and at least one motion sensor, an interaction device, wherein both devices are connected to the computing unit and are foreseen as interface inbetween a user and the simulation software application, wherein the simulation software application is foreseen to provide a virtual workspace, to provide a configurable model of at least one animated prototype of production means which is placed within the virtual workspace, to provide a model of an animated person, to place and animate the model of the person in the virtual workspace according to data of at least the motion sensor and to continuously calculate image data corresponding to the perspective of the animated persons binocular view and to transmit them to the mobile vision device so that they are continuously displayed on the two independent screens as a stereo view for a user wearing the mobile vision device. The invention is also related to a method for commissioning of production means with a system according to the invention.

It is known that industrial production plants typically comprise a large number of production means such as robots or other machines, which in many cases interact each with each other according to the needs of a respective production flow. In order to get a production line ready for production a so called commissioning of production means is required. Here the parameters of respective production means are adapted to the demands of a desired production process. This can be for example the generation respectively optimization of a robot program or the adaptation of the workspace of a robot, for example concerning ergonomic frame conditions in case of a human-robot collaboration. But also the settings of any process parameters as well as the interaction inbetween different production means has to be scheduled and coordinated in a certain sequence and tested afterwards.

Commissioning of real production devices is time-consuming and increases the time inbetween the physical installation of a new production line and getting it started in a disadvantageous way, on the other side commissioning is required for ensuring a save start of the production process. The method of virtual commissioning is known in order to speed up the commissioning process. Here the individual production means are simulated in a virtual environment, based for example on a 3D simulation software application, and the commissioning parameters are adapted within the simulation model. Afterwards, the commissioning parameters are transferred from the simulation model to the respective corresponding real production means so that the effort for final commissioning of the real components is reduced to a minimum therewith since suitable commissioning parameters are already determined.

An example for such a known virtual commissioning is the use of 3D simulation programs such as "RobCad", where as well the objects to be manufactured as the production means such as a robot are simulated in an animated manner. The simulation may include also the controller of the robot so that the dynamic movement behavior of the animated robot corresponds to the dynamic movement behavior of the real robot in an excellent way. A virtual robot controller is able to control the movement of a robot according to a robot program which is runnable as well on a virtual as on a real robot. So it is possible to generate a movement program for a virtual robot offline and transfer it later on to a comparable real robot.

Disadvantageously within this state of the art is that the accuracy of such a simulation is aiming mainly to the technical functionality whereas especially ergonomic aspects of the operators of the production lines are not considerable when determining the commissioning parameters.

The paper "Introducing quantitative analysis methods into virtual environments for real-time and continuous ergonomic evaluations" by JAYARAM ET AL presents a work on methods to link virtual environments (VE) and quantitative ergonomic analysis tools in real time for occupational ergonomic studies.

Based on this state of the art it is objective of the invention to provide a system for commissioning of production means, which is easy to use and facilitates commissioning also with respect to ergonomic aspects.

This problem is solved by a system for commissioning of production means of the aforementioned kind. This is characterized in that the model of the animated prototype is configurable by interaction with the model of the animated person respectively the interaction device, whereby respective commissioning parameters of the model of the animated prototype are adapted, so that commissioning is enabled therewith and in that the 3D simulation software application is foreseen to provide the adapted commissioning parameters to an interface of the computing unit, so that they can be transferred to a comparable real production means.

Basic idea of the invention consists in foreseeing a model of an animated person within the 3D simulation software application which can be placed within the virtual workspace and which can interact with the animated prototype of the production means. By providing a mobile vision device with independent screens and an interaction device, it is possible to integrate a "real" user, who is wearing the mobile vision device, into the virtual environment. The mobile vision device might be used similar to a pair of glasses. Due to the two screens presenting vision data to the user corresponding to a binocular stereo view his visual impression within the virtual workspace is rather close to reality. The actual position of the user is determined by the motion sensor and transmitted to the 3D simulation software application. So movements of the position of the user in the real environment are performed also by the animated model of the person within the virtual workspace.

By use of the interaction device the user can interact with at least the respective animated prototype of the production means. An interaction device may comprise for example a camera in the near proximity of the user, which is recognizing his gestures respectively movements. So it is possible that the movements and gestures of the body of the real user are transferred to the model of the animated person and the real user is imaged into the virtual workspace with all detail movements and gestures. Dependent on the accuracy of the model of the animated person it is even possible, that the user is viewing his own virtual hands. Thus it is possible that the user is performing for example a movement with his fingers and this movement might automatically be interpreted to correspond to a movement pushing a virtual button within the virtual workspace. Since the user is able to see his own hands is also able to aim for a virtual button therewith. The virtual button might for example start or stop a respective simulation of a production process within the virtual workspace. But also a real button in the hand of the user is a suitable interaction device for a user to take influence on the simulation of the 3D simulation software application.

The movements and gestures of the model of the animated person within the virtual workspace correspond at least mostly to the movements and gestures of the user, who is wearing the mobile vision device and who is interacting by use of the interaction device. The movements of the user on the other side are intuitively strongly influenced by the vision data from the virtual workspace which the user is receiving from the stereo view of the mobile vision device. Thus also ergonomic aspects of the working environment within the virtual workspace are sensed by the user during interaction with the 3D simulation software application, which is running on a computing unit such as a personal computer, a workstation or a cloud computer system. If the user recognizes for example after commissioning a robot program for human interaction during a subsequent test within the virtual environment, that the ergonomic frame conditions for the human collaborator are not sufficient, he can modify the respective robot program directly in the virtual environment and do the test again.

Thus it is possible to find respective suitable commissioning parameters for the animated models of the production means, which correspond to suitable parameters of the real production means. The 3D simulation software application is foreseen to provide those commissioning parameters to an interface, so that they can be transferred as commissioning parameters into a comparable real production system, wherein the time for commissioning the real production system is reduced in an advantageous way.

According to a further embodiment of the invention the system comprises further mobile vision- and interaction- devices and the simulation software application is foreseen to provide and place further models of animated persons in the virtual workspace. Thus it is possible that several persons interact within the same virtual workspace and more complex human robot cooperation tasks with more than one human collaborator can be evaluated as well for example.

According to a further embodiment of the system according to the invention at least one vision- and interaction- device is remote from the computing unit so that multiple users can be at different locations. This enables in an advantageous way a virtual commissioning in one and the same virtual workspace even the users are in different countries for example.

According to a further embodiment of the invention the simulation software application is foreseen to continuously calculate image data corresponding to the perspective from a predefined view point within the virtual workspace and to transmit them to a further screen. Thus the whole simulation of the commissioning can be observed from an independent observation point. Of course the image data can also be 3D data so that the visual impression for the observing persons is as realistic as possible.

According to a further embodiment of the invention the interaction device comprises at least one sensor device for detecting and tracking movements or gestures of dedicated parts of the body of a user being in operating range to the sensor and the system is foreseen to assign a certain interaction to a detected movement or gesture. Thus an interaction such as pushing a button or so does not require a real button of an interaction device, moreover it is possible to create a virtual button or other interaction areas within the virtual workspace and assign a movement respectively gesture of the user to a specified interaction.

According to a further embodiment of the invention the configurable model of at least one animated prototype of production means represents an industrial robot. Industrial robots are components which require rather high effort for commissioning thus the time savings when commissioning them virtually are high.

A robot typically comprises a robot controller, which is foreseen to run a robot program defining its movements during production. In addition a robot program may also define the actions of a tooling device such as a welding apparatus, a painting device or a gripper. Especially safety aspects are also of importance since it has to be excluded, that the robot hurts or endangers a person present in the near of the robot. Also with respect to human-robot collaboration it has to be ensured that - despite of the required safety aspects - the collaboration process as such is feasible and corresponds to ergonomic requirements. This can be for example a required posture of a collaborative worker when handing over a workpiece to the collaborating robot. All those aspects have to be considered when commissioning a robot and in several cases - especially with respect to ergonomic frame conditions - several trials are required to find the correct commissioning parameters. Besides the ergonomic aspects also safety aspects are of relevance for robots. Safety issues are typically handled by the robot controller itself, so it is possible to evaluate also those aspects with a virtual robot controller, for example interlocking mechanism for a protected robot zone or such.

According to another embodiment of the invention the simulation software application provides a model for at least one virtual sensor within the virtual workspace so that at least the presence of an animated model of a person in the working range of the position of the sensor is detectable therewith. This enables for example the commissioning of safety mechanism since the presence of a person in the near of a robot is an unavoidable pre-condition that the person is endangered by the robot. There are several different possibilities for safety mechanism - in one case the robot performs an emergency stop in case that an operator is entering a protection zone around the robot. But also softer mechanisms are thinkable such as the robot is slowing down its movement speed as more as closer a person is approaching any moving part of the robot.

According to a preferred embodiment of the invention the configurable model of the robot comprises the model of a robot controller with its control logic behavior. Thus it is possible to run the same robot program in the virtual environment as in the real device without any amendments. Also human robot collaboration and the safety aspects are typically handled by a robot controller. Thus according to a further embodiment of the invention the model of the robot controller is also foreseen to run a real robot program.

According to a preferred embodiment of the invention the model of the robot is configurable so that its behavior is changeable respectively adaptable by applying respective commissioning parameters thereon. This is preferably done by interaction of the animated model of the person with the model of the robot in the virtual workspace. Thus the commissioning is as realistic as possible. Bu it is of course also possible, to change some commissioning parameters such as a robot program from outside the virtual workspace, for example by transferring a respective robot program on the memory of the computing unit and activating it thereon.

The problem of the invention is also solved by a method for commissioning of production means with a system according to the invention, comprising
- a mobile vision device comprising two independent screens for providing a binocular stereo view and at least one motion sensor,
- an interaction device,
- wherein both devices are connected to the computing unit and are foreseen as interface inbetween a user and the simulation software application,
   wherein the simulation software application is foreseen
- to provide a virtual workspace,
- to provide a configurable model of at least one animated prototype of production means which is placed within the virtual workspace,
- to provide a model of an animated person,
- to place and animate the model of the person in the virtual workspace according to data of at least the motion sensor,
- to continuously calculate image data corresponding to the perspective of the animated persons binocular view and to transmit them to the mobile vision device so that they are continuously displayed thereon,
   and wherein
- the model of the animated prototype is configurable by interaction with the model of the animated person respectively the interaction device, whereby respective commissioning parameters of the model of the animated prototype are adaptable, so that commissioning is enabled therewith and
- the 3D simulation software application is foreseen to provide the adapted commissioning parameters to an interface of the computing unit, so that they can be transferred to a comparable real production means.

The method is characterized by the following steps:
- configuring the animated prototype by use of the system for commissioning of production means,
- transferring commissioning parameters gained therewith to a real device corresponding to the animated prototype.

The principal advantages of this method correspond to the advantages of the respective system and already have been mentioned before. The most important steps of the method consist in configuring the animated prototype of the production means preferably within the virtual workspace, especially also concerning agronomical aspects which can be sensed by the user in a good way when using the system for commissioning according to the invention and which is not possible in an offline simulation. Also safety aspects such as the detection of a collision of a human with a robot can be evaluated. Of course the commissioning parameters of further components or production means are determinable according to the invention. By transferring the commissioning data from the 3D simulation application environment to a respective real device the time required for commissioning the real device is reduced in a significant way.

Further advantageous embodiments of the invention are mentioned in the dependent claims.

The invention will now be further explained by means of an exemplary embodiment and with reference to the accompanying drawings, in which:
- Figure 1: shows an exemplary first system for commissioning of production means and
- Figure 2: shows an exemplary second system for commissioning of production means.

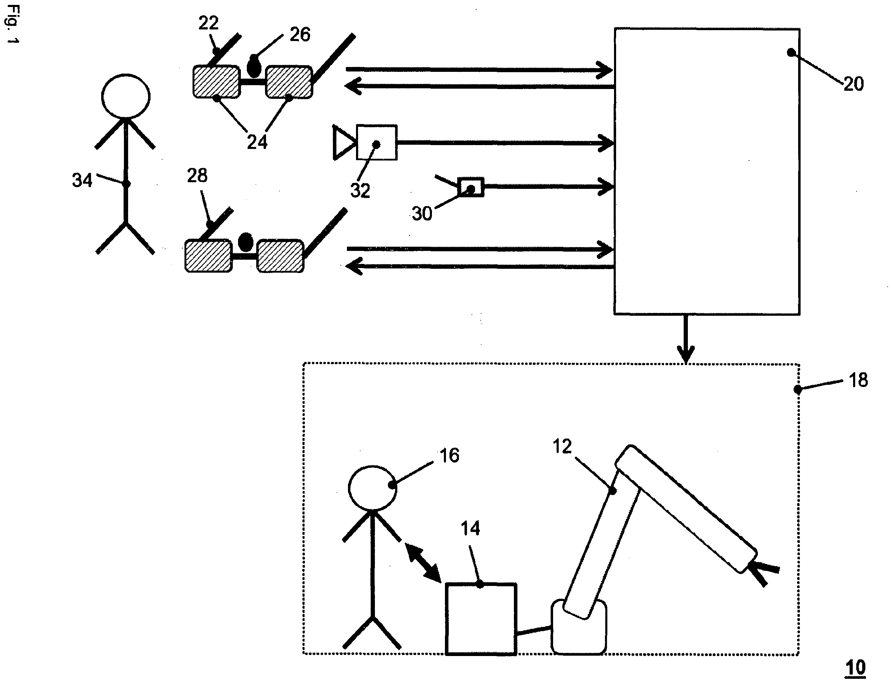

Figure 1 shows an exemplary first system 10 for commissioning of production means. A 3D simulation software application is running on a computing unit 20, for example a personal computer. The 3D simulation software application is providing a virtual workspace 18 with an animated model of a robot 12, an animated model of a robot controller 14 and an animated model of a person 16.

The computing unit 20 is connected via a cable- or wireless- connection with a first 22 and second 28 mobile device, which are similar to a respective pair of glasses. Both mobile devices 22, 28 comprise independent screens 24, where image data corresponding to the perspective of the animated persons 16 binocular views are continuously displayed on. Thus a real user 34 wearing the mobile devices 22, 28 has the same view than the model of the animated person 16 within the virtual workspace 16.

The mobile devices 22, 28 further comprise a respective motion sensor 26, wherefrom one is active, so that the model of the animated person 16 is placed and animated in the virtual workspace 18 according to the data of the active motion sensor. So the movements of the animated person 16 correspond in principal to the movements of the user 34. A first interaction device 30, in this example a joystick, is foreseen to provide the user 34 a possibility to interact with the 3D simulation software application, for example by pushing a real button to trigger an effect within the simulation or to adapt the own position within the virtual workspace. Such an interaction device could of course be also an input device with three or even six degrees of freedom in movement.

A second interaction device 32, in this case a camera, is foreseen for capturing any gestures of the worker who is in the visional range of the camera, for example a movement of the tip of a finger or of the arm. A further evaluation unit is foreseen for interpreting those gestures, so that detected gestures can be assigned to a dedicated effect within the simulation program, for example the pushing of a virtual button. Of course several cameras with different viewpoints are thinkable, which observe the same workspace from different perspectives.

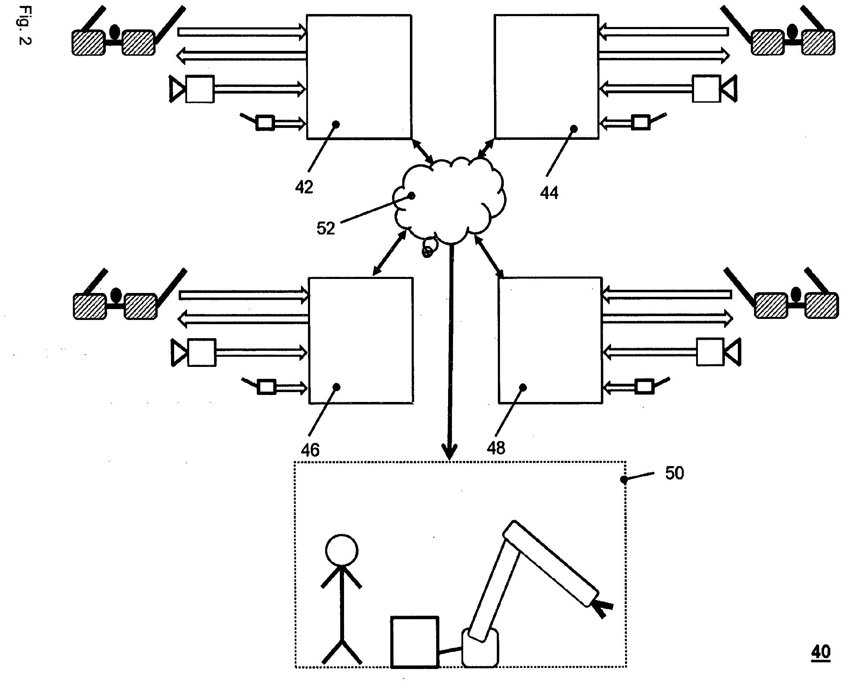

Figure 2 shows an exemplary second system 40 for commissioning of production means. The system comprises four exemplary modules 42, 44, 46, 48 which each comprise a computing unit, a mobile vision device and further interaction device. Thus each of the modules 42, 44, 46, 48 could be in principal a separate system for virtual commissioning. In this example all modules 42, 44, 46, 48 are linked within a cloud 52, so they may be distributed on different locations and can exchange data and information over the cloud 52. All modules 42, 44, 46, 48 are related to the same virtual workspace 50 and all animated models of production means and persons are present therein. So it is possible that several users at different locations are present at the same time in the same virtual workspace and do a collaborative work there with one or more workpieces.

### List of reference signs

- 10: exemplary first system for commissioning of production means
- 12: animated model of a robot
- 14: animated model of a robot controller
- 16: animated model of a person
- 18: virtual workspace
- 20: computing unit
- 22: first mobile vision device
- 24: independent screens
- 26: motion sensor
- 28: second mobile vision device
- 30: first interaction device
- 32: second interaction device
- 34: user
- 40: exemplary second system for commissioning of production means
- 42: first module of second system
- 44: second module of second system
- 46: third module of second system
- 48: fourth module of second system
- 50: virtual workspace
- 52: cloud

## Claims

1. System (10, 40) for commissioning of production means, comprising
• a computing unit (20) with a 3D simulation software application running thereon,
• a mobile vision device (22, 28) comprising two independent screens (24) and at least one motion sensor (26),
• an interaction device (30, 32),
• wherein both devices ((22, 28), (30, 32)) are connected to the computing unit (20) and are foreseen as interface inbetween a user (34) and the simulation software application,
wherein the simulation software application is foreseen
• to provide a virtual workspace (18, 50),
• to provide a configurable model of at least one animated prototype of production means which is placed within the virtual workspace (18, 50),
• to provide a model of an animated person (16),
• to place and animate the model of the person (16) in the virtual workspace (18, 50) according to data of at least the motion sensor (26),
• to continuously calculate image data corresponding to the perspective of the animated persons (16) binocular view and to transmit them to the mobile vision device (22, 26) so that they are continuously displayed on the two independent screens (24),
**characterized in that**
• the model of the animated prototype is configurable by interaction with the model of the animated person (16) respectively the interaction device (30, 32), whereby respective commissioning parameters of the model of the animated prototype are adaptable, so that commissioning is enabled therewith and
• the 3D simulation software application is foreseen to provide the adapted commissioning parameters to an interface of the computing unit (20), so that they can be transferred to a comparable real production means.

2. System according to claim 1, **characterized in that** the system comprises further mobile vision- and interaction- devices and **in that** the simulation software application is foreseen to provide and place further models of animated persons (16) in the virtual workspace (18, 50).

3. System according to claim 2, **characterized in that** at least one vision- (22, 28) and interaction- (30, 32) device is remote from the computing unit (20) so that multiple users (34) can be at different locations.

4. System according to any of the previous claims, **characterized in that** the simulation software application is foreseen to continuously calculate image data corresponding to the perspective from a predefined view point within the virtual workspace (18, 50) and to transmit them to a further screen.

5. System according to any of the previous claims, **characterized in that** the interaction device (30, 32) comprises at least one sensor device for detecting and tracking movements or gestures of dedicated parts of the body of a user (34) being in operating range to the sensor and **in that** the system is foreseen to assign a certain interaction to a detected movement or gesture.

6. System according to any of the previous claims, **characterized in that** the configurable model of at least one animated prototype of production means represents an industrial robot (12).

7. System according to claim 6, **characterized in that** the simulation software application provides a model for at least one virtual sensor within the virtual workspace (18, 50) so that at least the presence of an animated model of a person (16) in the working range of the position of the sensor is detectable therewith.

8. System according to claim 6 or 7, **characterized in that** the configurable model of the robot (12) comprises the model of a robot controller (14) with its control logic behavior.

9. System according to claim 8, **characterized in that** the model of the robot controller (14) is foreseen to run a real robot program.

10. System according to any of claim 6 to 9, **characterized in that** the model of the robot (12) is configurable.

11. Method for commissioning of production means with a system (10, 40) compris-
• a mobile vision device (22, 28) comprising two independent screens (24) and at least one motion sensor (26),
• an interaction device (30, 32),
• wherein both devices ((22, 28), (30, 32)) are connected to the computing unit (20) and are foreseen as interface inbetween a user (34) and the simulation software application,
wherein the simulation software application is foreseen
• to provide a virtual workspace (18, 50),
• to provide a configurable model of at least one animated prototype of production means which is placed within the virtual workspace (18, 50),
• to provide a model of an animated person (16),
• to place and animate the model of the person (16) in the virtual workspace (18, 50) according to data of at least the motion sensor (26),
• to continuously calculate image data corresponding to the perspective of the animated persons (16) binocular view and to transmit them to the mobile vision device (22, 28) so that they are continuously displayed thereon,
and wherein
• the model of the animated prototype is configurable by interaction with the model of the animated person (16) respectively the interaction device (30, 32), whereby respective commissioning parameters of the model of the animated prototype are adaptable, so that commissioning is enabled therewith and
• the 3D simulation software application is foreseen to provide the adapted commissioning parameters to an interface of the computing unit (20), so that they can be transferred to a comparable real production means.
**characterized by** the following steps
• configuring the animated prototype by use of the system for commissioning of production means,
• transferring commissioning parameters gained therewith to a real device corresponding to the animated prototype.

## Patentansprüche

1. System (10, 40) zur Inbetriebsetzung von Produktionsmitteln, das Folgendes umfasst:
- eine Recheneinheit (20) mit einer auf ihr laufenden 3D-Simulationssoftwareanwendung,
- eine mobile Sichtvorrichtung (22, 28), die zwei unabhängige Bildschirme (24) und mindestens einen Bewegungssensor (26) umfasst,
- eine Interaktionsvorrichtung (30, 32),
- wobei beide Vorrichtungen ((22, 28), (30, 32)) mit der Recheneinheit (20) verbunden sind und als Schnittstelle zwischen einem Anwender (34) und der Simulationssoftwareanwendung vorgesehen sind,
wobei vorgesehen ist, dass die Simulationssoftwareanwendung
- einen virtuellen Arbeitsraum (18, 50) bereitstellt,
- ein konfigurierbares Modell mindestens eines animierten Prototyps von Produktionsmitteln bereitstellt, das innerhalb des virtuellen Arbeitsraums (18, 50) positioniert ist,
- ein Modell einer animierten Person (16) bereitstellt,
- das Modell der Person (16) in dem virtuellen Arbeitsraum (18, 50) gemäß Daten mindestens eines Bewegungssensors (26) positioniert und animiert,
- kontinuierlich Bilddaten berechnet, die der Perspektive der binokularen Sicht der animierten Person (16) entsprechen, und sie an die mobile Sichtvorrichtung (22, 26) sendet, so dass sie kontinuierlich auf den beiden unabhängigen Bildschirmen (24) angezeigt werden,
**dadurch gekennzeichnet, dass**
- das Modell des animierten Prototyps durch Interaktion mit dem Modell der animierten Person (16) beziehungsweise der Interaktionsvorrichtung (30, 32) konfigurierbar ist, wobei jeweilige Inbetriebsetzungsparameter des Modells des animierten Prototyps anpassbar sind, so dass eine Inbetriebsetzung damit ermöglicht wird, und
- vorgesehen ist, dass die 3D-Simulationssoftwareanwendung die angepassten Inbetriebsetzungsparameter an eine Schnittstelle der Recheneinheit (20) liefert, so dass sie an vergleichbare reale Produktionsmittel übertragen werden können.

2. System nach Anspruch 1, **dadurch gekennzeichnet, dass** das System ferner mobile Sicht- und Interaktionsvorrichtungen umfasst und dass vorgesehen ist, dass die Simulationssoftwareanwendung weitere Modelle animierter Personen (16) bereitstellt und in dem virtuellen Arbeitsraum (18, 50) positioniert.

3. System nach Anspruch 2, **dadurch gekennzeichnet, dass** mindestens eine Sicht- (22, 28) und Interaktionsvorrichtung (30, 32) von der Recheneinheit (20) entfernt ist, so dass mehrere Anwender (34) an verschiedenen Orten sein können.

4. System nach einem der vorhergehenden Ansprüche, **dadurch gekennzeichnet, dass** vorgesehen ist, dass die Simulationssoftwareanwendung kontinuierlich Bilddaten berechnet, die einer Perspektive von einem vordefinierten Sichtpunkt innerhalb des virtuellen Arbeitsraums (18, 50) entsprechen und sie an einen weiteren Bildschirm sendet.

5. System nach einem der vorhergehenden Ansprüche, **dadurch gekennzeichnet, dass** die Interaktionsvorrichtung (30, 32) mindestens eine Sensorvorrichtung zum Detektieren und Verfolgen von Bewegungen oder Gesten dedizierter Teile des Körpers eines Anwenders (34), der in einem Aktionsradius des Sensors ist, umfasst, und dadurch, dass vorgesehen ist, dass das System eine bestimmte Interaktion einer detektierten Bewegung oder Geste zuweist.

6. System nach einem der vorhergehenden Ansprüche, **dadurch gekennzeichnet, dass** das konfigurierbare Modell mindestens eines animierten Prototyps von Produktionsmitteln einen Industrieroboter (12) repräsentiert.

7. System nach Anspruch 6, **dadurch gekennzeichnet, dass** die Simulationssoftwareanwendung ein Modell für mindestens einen virtuellen Sensor innerhalb des virtuellen Arbeitsraums (18, 50) bereitstellt, so dass mindestens die Anwesenheit eines animierten Modells einer Person (16) in dem Arbeitsbereich der Position des Sensors damit detektierbar ist.

8. System nach Anspruch 6 oder 7, **dadurch gekennzeichnet, dass** das konfigurierbare Modell des Roboters (12) das Modell einer Robotersteuereinheit (14) mit ihrem Steuerlogikverhalten umfasst.

9. System nach Anspruch 8, **dadurch gekennzeichnet, dass** vorgesehen ist, dass das Modell der Robotersteuereinheit (14) ein reales Roboterprogramm ausführt.

10. System nach einem des Anspruchs 6 bis 9, **dadurch gekennzeichnet, dass** das Modell des Roboters (12) konfigurierbar ist.

11. Verfahren zur Inbetriebsetzung von Produktionsmitteln mit einem System (10, 40), das Folgendes umfasst:
- eine mobile Sichtvorrichtung (22, 28), die zwei unabhängige Bildschirme (24) und mindestens einen Bewegungssensor (26) umfasst,
- eine Interaktionsvorrichtung (30, 32),
- wobei beide Vorrichtungen ((22, 28), (30, 32)) mit der Recheneinheit (20) verbunden sind und als Schnittstelle zwischen einem Anwender (34) und der Simulationssoftwareanwendung vorgesehen sind,
wobei vorgesehen ist, dass die Simulationssoftwareanwendung
- einen virtuellen Arbeitsraum (18, 50) bereitstellt,
- ein konfigurierbares Modell mindestens eines animierten Prototyps von Produktionsmitteln bereitstellt, das innerhalb des virtuellen Arbeitsraums (18, 50) positioniert ist,
- ein Modell einer animierten Person (16) bereitstellt,
- das Modell der Person (16) in dem virtuellen Arbeitsraum (18, 50) gemäß Daten mindestens eines Bewegungssensors (26) positioniert und animiert,
- kontinuierlich Bilddaten berechnet, die der Perspektive der binokularen Sicht der animierten Person (16) entsprechen, und sie an die mobile Sichtvorrichtung (22, 26) sendet, so dass sie kontinuierlich auf ihr angezeigt werden,
und wobei
- das Modell des animierten Prototyps durch Interaktion mit dem Modell der animierten Person (16) beziehungsweise der Interaktionsvorrichtung (30, 32) konfigurierbar ist, wobei jeweilige Inbetriebsetzungsparameter des Modells des animierten Prototyps anpassbar sind, so dass eine Inbetriebsetzung damit ermöglicht wird, und
- vorgesehen ist, dass die 3D-Simulationssoftwareanwendung die angepassten Inbetriebsetzungsparameter an eine Schnittstelle der Recheneinheit (20) liefert, so dass sie an vergleichbare reale Produktionsmittel übertragen werden können;
**gekennzeichnet durch** die folgenden Schritte
- Konfigurieren des animierten Prototyps durch die Verwendung des Systems zur Inbetriebsetzung von Produktionsmitteln,
- Übertragen von Inbetriebsetzungsparametern, die damit gewonnen werden, an eine reale Vorrichtung, die dem animierten Prototyp entspricht.

## Revendications

1. Système (10, 40) destiné à la mise en service de moyens de production, comprenant :
• une unité informatique (20) sur laquelle fonctionne une application logicielle de simulation 3D,
• un dispositif de visualisation mobile (22, 28) comprenant deux écrans indépendants (24) et au moins un capteur de mouvement (26),
• un dispositif d'interaction (30, 32),
• dans lequel les deux dispositifs ((22, 28), (30, 32)) sont connectés à l'unité informatique (20) et sont prévus comme une interface entre un utilisateur (34) et l'application logicielle de simulation,
dans lequel l'application logicielle de simulation est prévue pour :
• fournir un espace de travail virtuel (18, 50),
• fournir un modèle configurable d'au moins un prototype animé de moyens de production qui est placé dans l'espace de travail virtuel (18, 50),
• fournir un modèle d'une personne animée (16),
• placer et animer le modèle de la personne (16) dans l'espace de travail virtuel (18, 50) en fonction des données d'au moins le capteur de mouvement (26),
• calculer en continu des données d'images correspondant à la perspective de la vision binoculaire de personnes animées (16) et les transmettre au dispositif de visualisation mobile (22, 26) afin qu'elles soient affichées en continu sur les deux écrans indépendants (24),
**caractérisé en ce que**
• le modèle du prototype animé est configurable par une interaction avec le modèle de la personne animée (16) respectivement le dispositif d'interaction (30, 32), moyennant quoi les paramètres de mise en service respectifs du modèle du prototype animé sont adaptables, de sorte que la mise en service est activée avec ceux-ci et
• l'application logicielle de simulation 3D est prévue pour fournir les paramètres de mise en service adaptés à une interface de l'unité informatique (20), de sorte qu'ils puissent être transférés à un moyen de production réel comparable.

2. Système selon la revendication 1, **caractérisé en ce que** le système comprend en outre des dispositifs supplémentaires d'interaction et de visualisation mobile et **en ce que** l'application logicielle de simulation est prévue pour fournir et placer des modèles supplémentaires de personnes animées (16) dans l'espace de travail virtuel (18, 50).

3. Système selon la revendication 2, **caractérisé en ce qu'au** moins un dispositif de visualisation (22, 28) et d'interaction (30, 32) est éloigné de l'unité informatique (20) de sorte que de multiples utilisateurs (34) peuvent se situer à des emplacements différents.

4. Système selon l'une quelconque des revendications précédentes, **caractérisé en ce que** l'application logicielle de simulation est prévue pour calculer en continu des données d'images correspondant à la perspective à partir d'un point de vision prédéfini dans l'espace de travail virtuel (18, 50) et pour les transmettre à un écran supplémentaire.

5. Système selon l'une quelconque des revendications précédentes, **caractérisé en ce que** le dispositif d'interaction (30, 32) comprend au moins un dispositif de capteur permettant de détecter et de suivre les mouvements ou les gestes de parties dédiées du corps d'un utilisateur (34) qui se trouve dans la plage de fonctionnement du capteur et **en ce que** le système est prévu pour attribuer une certaine interaction à un mouvement ou un geste détecté.

6. Système selon l'une quelconque des revendications précédentes, **caractérisé en ce que** le modèle configurable d'au moins un prototype animé de moyens de production représente un robot industriel (12).

7. Système selon la revendication 6, **caractérisé en ce que** l'application logicielle de simulation fournit un modèle pour au moins un capteur virtuel dans l'espace de travail virtuel (18, 50) de sorte qu'au moins la présence d'un modèle animé d'une personne (16) dans la plage de fonctionnement de la position du capteur est détectable avec celui-ci.

8. Système selon la revendication 6 ou 7, **caractérisé en ce que** le modèle configurable du robot (12) comprend le modèle d'un contrôleur de robot (14) avec son comportement logique de commande.

9. Système selon la revendication 8, **caractérisé en ce que** le modèle du contrôleur de robot (14) est prévu pour exécuter un programme de robot réel.

10. Système selon l'une quelconque des revendications 6 à 9, **caractérisé en ce que** le modèle du robot (12) est configurable.

11. Procédé de mise en service de moyens de production avec un système (10, 40) comprenant :
• un dispositif de visualisation mobile (22, 28) comprenant deux écrans indépendants (24) et au moins un capteur de mouvement (26),
• un dispositif d'interaction (30, 32),
• dans lequel les deux dispositifs ((22, 28), (30, 32)) sont connectés à l'unité informatique (20) et sont prévus comme une interface entre un utilisateur (34) et l'application logicielle de simulation,
dans lequel l'application logicielle de simulation est prévue pour :
• fournir un espace de travail virtuel (18, 50),
• fournir un modèle configurable d'au moins un prototype animé de moyens de production qui est placé dans l'espace de travail virtuel (18, 50),
• fournir un modèle d'une personne animée (16),
• placer et animer le modèle de la personne (16) dans l'espace de travail virtuel (18, 50) en fonction des données d'au moins le capteur de mouvement (26),
• calculer en continu des données d'images correspondant à la perspective de la vision binoculaire de personnes animées (16) et les transmettre au dispositif de visualisation mobile (22, 28) afin qu'elles soient affichées en continu sur celui-ci,
et dans lequel
• le modèle du prototype animé est configurable par une interaction avec le modèle de la personne animée (16) respectivement le dispositif d'interaction (30, 32), moyennant quoi les paramètres de mise en service respectifs du modèle du prototype animé sont adaptables, de sorte que la mise en service est activée avec ceux-ci et
• l'application logicielle de simulation 3D est prévue pour fournir les paramètres de mise en service adaptés à une interface de l'unité informatique (20), de sorte qu'ils puissent être transférés à un moyen de production réel comparable,
**caractérisé par** les étapes suivantes :
• la configuration du prototype animé en utilisant le système de mise en service de moyens de production,
• le transfert de paramètres de mise en service gagnés avec ceux-ci à un dispositif réel correspondant au prototype animé.
